# EUROPÄISCHE PATENTSCHRIFT

(11) **EP 3 348 381 B1**
(45) Veröffentlichungstag und Bekanntmachung des Hinweises auf die Patenterteilung: **06.05.2020**
(21) Anmeldenummer: 17151700.6
(22) Anmeldetag: 17.01.2017
(51) Int. Cl.: B29C 65/14, B29C 65/20, B29C 65/78, F16L 47/02, B29L 23/00

(54) **KUNSTSTOFFSCHWEISSMASCHINE**
PLASTIC WELDING MACHINE
MACHINE DE SOUDAGE DE PLASTIQUE

(43) Veröffentlichungstag der Anmeldung: 18.07.2018
(73) Patentinhaber: Georg Fischer Rohrleitungssysteme AG, 8201 Schaffhausen (CH)
(72) Erfinder: Hasific, Edin, 8207 Schaffhausen (CH); Reiz, Robert, 79780 Stühlingen (DE)
(74) Vertreter: Fenner, Seraina

(56) Entgegenhaltungen:
- DE-A1- 3 739 656

## Beschreibung

Die Erfindung betrifft eine Vorrichtung zum stirnseitigen Verschweissen von Kunststoffteilen vorzugsweise Kunststoffrohen und Kunststofffittings beinhaltend ein Grundgestell, wobei das Grundgestell eine Grundplatte aufweist, mindestens eine Führung, Spannvorrichtungen zur koaxialen Fixierung der zu verschweissenden Kunststoffteile, wobei die Führung zur Führung mindestens einer Spannvorrichtung dient und die Spannvorrichtung und die Führung auf der Grundplatte angeordnet sind, eine Bearbeitungseinheit zum Vorbehandeln der Stirnseiten der zu verschweissenden Kunststoffteile vorzugsweise einen Hobel und ein Heizelement zum Aufheizen der Enden der zu verschweissenden Kunststoffteile.

Solche Kunststoffschweissmaschinen sind aus dem Stand der Technik bekannt und werden vorzugsweise für Verschweissungen von thermoplastischen Rohrleitungen eingesetzt. Zu verschweissende Rohrleitungen werden in ganz unterschiedlichen Gebieten eingesetzt wodurch auch unterschiedliche Voraussetzungen und Anforderungen vorliegen. Zum einen sind Stumpfschweissmaschinen bekannt für den Einsatz von Verschweissungen an grösseren Rohrdurchmessern, die in der Versorgung, wie beispielsweise Wasserversorgung, Anwendung findet und zum anderen auch für Rohrleitungen im Laborbereich unter Hochreinbedingungen. Selbstverständlich sind auch viele weitere Anwendungsgebiete für Stumpfschweissmaschinen bekannt.

Die aus dem Stand der Technik bekannten Stumpfschweissmaschinen für Kunststoffrohrleitungen weisen meist mindestens zwei Klemmstellen auf in der die zu verschweissenden Rohrleitungen koaxial zueinander angeordnet sind. Mindestens eine Klemmstelle ist axial verschiebbar um das Zusammenfügen der Rohrleitungen zu gewährleisten. Üblicherweise beinhaltet eine solche Schweissmaschine eine Bearbeitungsvorrichtung bzw. einen Hobel um die Rohrenden zu überarbeiten um optimale Stirnseiten zur Verschweissung zu gewährleisten, wobei manche die Rohrenden bereits auf ein genaues Mass hobeln was den Schweissprozessablauf optimiert.

Als weiteres Modul weist eine Stumpfschweissmaschine ein Heizelement auf, das ebenfalls zwischen den Klemmstellen bzw. die beiden Rohrenden bringbar ist. Mittels des Heizelements werden die Rohrenden erwärmt, sei es über direkten Kontakt mit dem Heizspiegel oder kontaktlos bspw. mittels Infrarotstrahlung.

Die Bearbeitungsvorrichtung wie auch das Heizelement oder andere Module werden in den aus dem Stand der Technik bekannten Vorrichtungen meist von der Seite hineingeschwenkt. Die DE 196 15 204 C1 offenbart eine solche Vorrichtung.

Auch aus der DE 40 13 471 A1 ist eine solche Ausführungsform einer Kunststoffschweissmaschine ersichtlich.

Nachteilig an diesen Vorrichtungen ist, dass durch die Anordnung bzw. das Ausschwenken der Module, wie Bearbeitungsvorrichtung und Heizelement, der Raum hinter oder vor den Klemmstellen nicht frei sondern dort die Ruheposition der Module ist, wodurch kaum Freiraum vorhanden ist bzw. nur sehr eingeschränkt vorliegt und dadurch gewisse Positionierungen der zu verschweissenden Rohrleitungen an solchen Stumpfschweissmaschinen nicht umsetzbar sind.

Beispielsweise lassen sich Bogenstücke oder auch T-Verbindungsstücke in einer aus dem Stand der Technik bekannten Stumpfschweissmaschinen nicht in horizontaler Lage bzw. hier parallel zur Grundplatte verschweissen, da sie meist mit ihren Abzweigern an den in der Ruheposition verweilenden Modulen oder auch an den Antriebseinheiten der Schweissmaschine, die ungünstig angeordnet sind, anstehen. Die Offenlegungsschrift DE 37 39 656 A1 beschreibt eine Vorrichtung zum Herstellen einer Eckstoßverbindung zwischen zwei Kunststoffprofilsträngen.

Es ist Aufgabe der Erfindung eine Vorrichtung zum Verschweissen von Kunststoffteilen vorzusehen, welche das Verschweissen von T-Verbindungsstücken, Bögen oder anderen Teilen die einen erweiterten Freiraum benötigen bzw. einen grösseren Platzbedarf aufweisen, ermöglicht.

Diese Aufgabe wird erfindungsgemäss dadurch gelöst, dass die Bearbeitungseinheit und das Heizelement während ihres Nichteinsatzes bzw. in der Ruheposition unterhalb der Grundplatte horizontal verschiebbar angeordnet sind.

Die erfindungsgemässe Vorrichtung zum stirnseitigen Verschweissen von Kunststoffteilen, vorzugsweise Kunststoffrohren beinhaltet ein Grundgestell. Das Grundgestell bringt den Vorteil mit sich, dass die komplette Vorrichtung in sich steif und stabil ausgebildet ist. Vorzugsweise hat das Grundgestell eine rechteckig geschlossene Form, wobei vorzugsweise Öffnungen darin vorgesehen sind um den Zugang zu den Modulen bzw. der Bearbeitungseinheit und dem Heizelement wie auch möglichen weiteren Modulen zu gewährleisten. Die Öffnungen können vorzugsweise verschlossen werden, beispielsweise durch eingebaute Türen oder ähnliches. Durch das Verschliessen der Öffnungen im Grundgestell wie auch in der Grundplatte ist der Wärmeverlust des Heizelements währenddessen das Heizelement in Ruheposition ist geringer da die Wärme im Grundgestell gehalten werden kann, wodurch eine Energieeinsparung ermöglicht wird.

Auf der oberen Seite des Grundgestells ist die Grundplatte angeordnet, wobei diese mit dem Grundgestell einteilig ausgebildet sein kann oder aber auch als separate Platte die mit dem Grundgestell stoff- oder kraftschlüssig verbunden ist.

Auf der Grundplatte ist mindestens eine Führung angeordnet wie auch Spannvorrichtungen. Die Spannvorrichtungen dienen der Fixierung der Kunststoffteile, wobei die Spannvorrichtungen koaxial zueinander ausgerichtet sind. Mindestens eines der Spannvorrichtungen ist auf einer Führung angeordnet um eine axiale Verschiebung zu ermöglichen und dadurch die zu verschweissenden Teile relativ zueinander zu bewegen sowie auch die Überarbeitung der Stirnseiten mittels Bearbeitungseinheit oder das Erwärmen mittels Heizelement.

Selbstverständlich können auch mehrere Spannvorrichtungen auf Führungen angeordnet sein.
Zudem weist die erfindungsgemässe Vorrichtung eine Bearbeitungseinheit vorzugsweise einen Hobel wie auch ein Heizelement auf, wobei das Heizelement ein Heizspiegel der mittels Kontakt das zu verschweissende Kunststoffteil erwärmt, wie auch ein Heizelement, das mittels Infrarotstrahlung die Wärme kontaktlos auf die Rohrenden projiziert, sein kann.
Die Bearbeitungseinheit wie auch das Heizelement sind in der erfindungsgemässen Vorrichtung während ihres Nichteinsatzes bzw. ihrer Ruheposition unterhalb der Grundplatte angeordnet. Dies bedeutet, dass die Schweissmaschinen neben bzw. vor und hinter den Spannvorrichtungen wie auch darüber freien Raum hat, wodurch die abzweigenden Rohrleitungen nicht mehr tangiert werden und eine Verschweissung mittels Schweissmaschine von Bögen, T-Verbindungsstücken und weiteren Kunststoffteilen die mehr Platz benötigen möglich ist.

Vorzugsweise sind die Module wie Bearbeitungseinheit und Heizelement wie auch weitere Module während ihres Nichtgebrauchs direkt unterhalb der Spannvorrichtungen angeordnet. Als bevorzugte Ausführungsform hat sich gezeigt, wenn die komplette Bearbeitungseinheit und das komplette Heizelement unterhalb der Grundplatte angeordnet ist. Das heisst, die ganzen Module sind komplett unterhalb der Grundplatte in Ruheposition angeordnet. Es besteht weder eine Verletzungsgefahr an den Messern des Hobels noch kann sich der Verarbeiter an den heissen Heizelementen verbrennen. Zudem ist die Komponenten vor mechanischer Beschädigung geschützt werden.

Mit Ruheposition bzw. Nichteinsatz ist die Anordnungen der Module zu verstehen in der sie nicht zwischen den zu verschweissenden Kunststoffteilen angeordnet sind um diese zu bearbeiten oder zu erwärmen.

Vorzugsweise kann die Bearbeitungseinheit wie auch das Heizelement durch Hochfahren aus der Ruheposition auf Ebene Grundplatte gebracht werden wo die Module dann die benötigte Position zur Bearbeitung oder Erwärmung der Kunststoffteilenden einnehmen.

Die Bearbeitungseinheit wie auch das Heizelement sind jeweils separat hochfahrbar und somit auch separat absenkbar.

Die Module werden jeweils zum geforderten Zeitpunkt bezüglich des Schweissprozesses in die Bearbeitungsposition zwischen den Kunststoffteilenden bzw. den Spannvorrichtungen gebracht und nach ihrem Einsatz wieder in die Ruheposition abgesenkt.

Bevorzugt sind die Bearbeitungseinheiten und das Heizelement wie auch mögliche weitere Module hochfahrbar und absenkbar. Vorzugsweise erfolgt das Hochfahren und Absenken der Module vertikal zur Grundplatte.

In der Grundplatte befindet sich vorzugsweise eine Öffnung durch welche die Bearbeitungseinheit wie auch das Heizelement beim Hochfahren oder Absenken hindurchtreten wie auch andere Module durch diese Öffnung hindurchtreten würden. Die Öffnung ist zwischen den Spannvorrichtungen angeordnet.

Die Öffnung ist vorzugsweise verschliessbar, beispielsweise mittels einer eingebauten verschiebbaren oder klappbaren Platte. Durch das Verschliessen der Öffnung währenddessen die Module in Ruheposition sind, kann der Wärmeverlust am Heizelement reduziert werden, wodurch Energie eingespart werden kann.

Erfindungsgemäß sind die Bearbeitungseinheit wie auch das Heizelement in der Ruheposition unterhalb der Grundplatte horizontal verschiebbar angeordnet.

Dies ermöglicht das individuelle Positionieren des gewünschten Moduls unter der Öffnung in der Grundplatte um dann das Hochfahren auf Ebene Grundplatte zu gewährleisten.

Vorzugsweise sind die Module dazu auf einer Führung angeordnet die das horizontale Verschieben unterhalb der Grundplatte ermöglichen.

Sowohl die horizontale wie auch die vertikale Verschiebung der Module können manuell wie auch mittels eines Antriebs erfolgen.

Ein Ausführungsbeispiel der Erfindung wird anhand der Figuren beschrieben, wobei sich die Erfindung nicht nur auf das Ausführungsbeispiel beschränkt. Es zeigen:
- Fig. 1: eine dreidimensionale Ansicht einer erfindungsgemässen Vorrichtung wobei die Module in Ruheposition stehen,
- Fig. 2: eine dreidimensionale Ansicht einer erfindungsgemässen Vorrichtung wobei eines der Module am hochfahren bzw. absenken ist und
- Fig. 3: eine dreidimensionale Ansicht einer erfindungsgemässen Vorrichtung wobei eines der Module in Bearbeitungsposition ist.

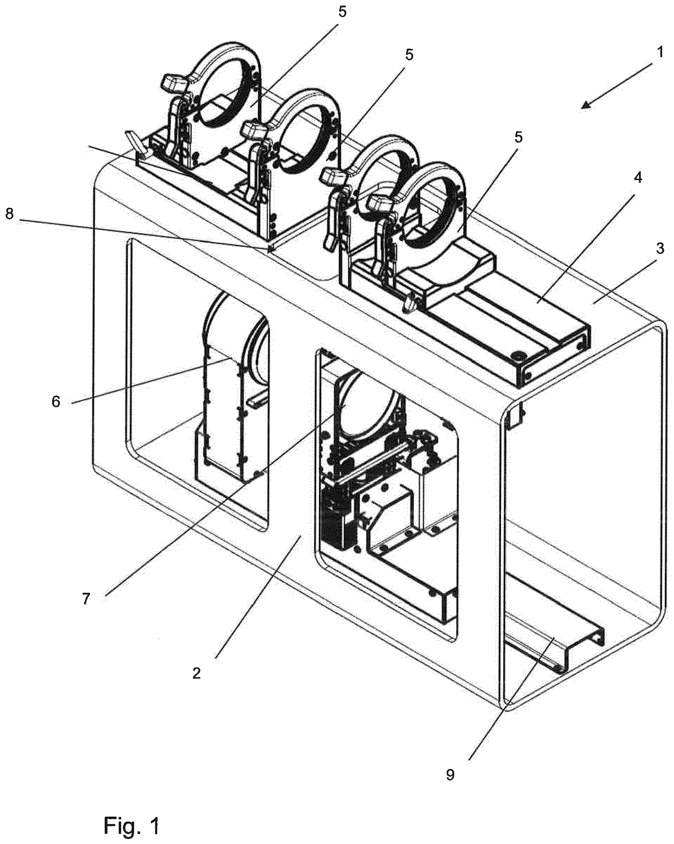

Die in Fig. 1 dargestellte Zeichnung zeigt eine erfindungsgemässe Vorrichtung 1 zum stirnseitigen Verschweissen von Kunststoffteilen. Die Vorrichtung 1 beinhaltet ein Grundgestell 2 welches eine stabile Basis bildet. Das Grundgestell 2 weist vorzugsweise eine rechteckige Struktur auf. Vorteilhaft ist es, wenn das Grundgestell 2 geschlossen ist mit ein paar darin vorgesehenen Öffnungen die den Zugang zu den Modulen ermöglichen. Auf der oberen Seite des Grundgestells 2 befindet sich eine Grundplatte 3, wobei diese im Grundgestell 2 einstückig integriert sein kann oder auch als separate Platte mit dem Grundgestell 2 verbunden werden kann. Auf der Grundplatte 3 ist mindestens eine Führung 4 zur Führung einer Spannvorrichtung 5 angeordnet. Die Spannvorrichtungen 5 sind koaxial zueinander angeordnet um eine koaxiale Ausrichtung der miteinander zu verschweissenden Kunststoffteile zu ermöglichen. Zu bevorzugen sind vier Spannvorrichtungen 5, wobei auch zwei ausreichen würden. Durch die Führungen 4 lassen sich die Spannvorrichtungen 5 relativ zueinander verschieben um die Kunststoffteile am Ende des Schweissprozesses zusammenzufügen wie aber auch zur vorherigen Bearbeitung und Erwärmung. Die erfindungsgemässe Vorrichtung 1 weist zur stirnseitigen Bearbeitung und Erwärmung der Kunststoffteile bzw. Rohre eine Bearbeitungseinheit 6, vorzugsweise einen Hobel, auf sowie ein Heizelement 7. In Fig. 1 ist die Anordnung dieser Module 6, 7 in Ruheposition bzw. im Nichteinsatz unterhalb der Grundplatte 3 im Grundgestell 2 gut zu erkennen. Die kompletten Module 6, 7 sind komplett unter der Grundplatte angeordnet wodurch sie beim Verschweissen komplexer Teile den Raum nicht versperren bzw. einschränken. Dies ermöglicht das Verschweissen von Bögen, T-Verbindungsstücken und weiteren Teilen die einen hohen Platzbedarf aufweisen.

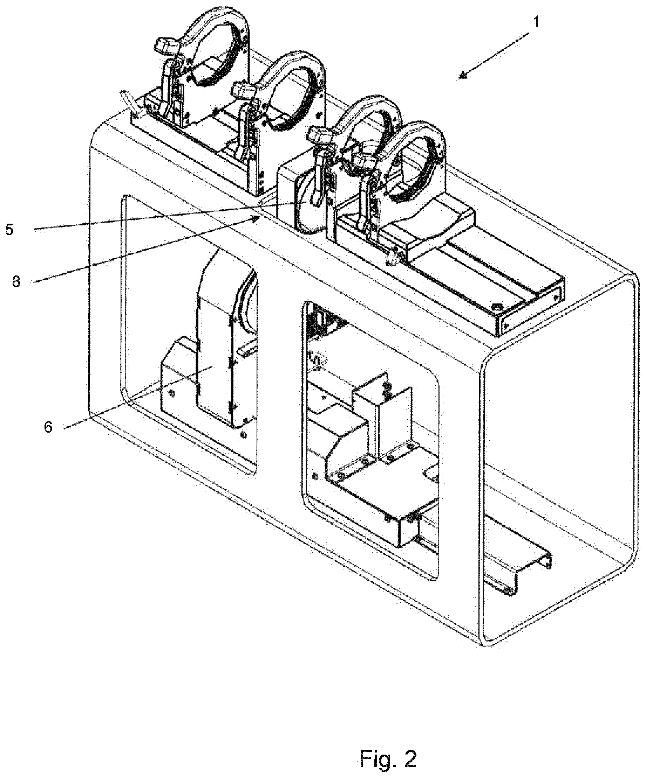

Fig. 2 zeigt die Vorrichtung 1 im Moment wo das eine Modul, nämlich das Heizelement 4, hochgefahren bzw. abgesenkt wird. Dies erfolgt durch eine Öffnung 8 in der Grundplatte 3 die zwischen den Spannvorrichtungen 5 angeordnet ist. Die Öffnung 8 ermöglicht das Durchtreten der Module auf Ebene der Grundplatte 3 zur Bearbeitung der Rohrenden bzw. zur Erwärmung der Rohrenden. Das Hochfahren wie auch das Absenken der Module bzw. der Bearbeitungseinheit 6 und des Heizelements 7 wie auch möglichen weiteren Modulen kann manuell wie auch mittels eines Antriebs (nicht dargestellt) erfolgen und findet vertikal bzw. rechtwinklig zur Grundplatte 3 statt.

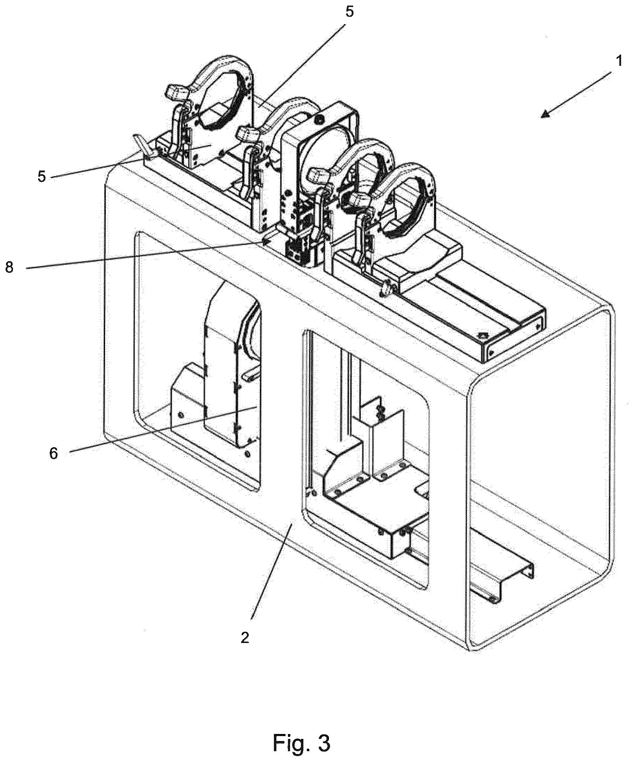

Fig. 3 zeigt die erfindungsgemässe Vorrichtung in der das Heizelement 7 sich in Bearbeitungsposition bzw. in Position zur Erwärmung der Rohrleitungsenden befindet. Die Spannvorrichtungen 5 mit darin fixierten Kunststoffteilen vorzugsweise Rohren und Fittings (nicht dargestellt) werden dann mit Hilfe der Führungen 4 axial justiert. Das Heizelement 7 kann ein kontaktloses wie auch eines sein das mittels Kontakt die Wärme an die zu verschweissenden Kunststoffteile überträgt.

Nach dem Erwärmungsvorgang wird das Heizelement 7 wieder in die Ruheposition abgesenkt. Um den unter der Grundplatte 3 in Ruheposition angeordneten Modulen den Zugang durch die Öffnung 8 zu gewährleisten sind sie horizontal verschiebbar angeordnet. Das heisst, die Bearbeitungseinrichtung 6 wie auch das Heizelement 7 können im Gestell 2 verschoben und in die gewünschte Position gebracht werden um dann durch die Öffnung 8 hochgefahren zu werden. Auch die horizontale Verschiebung kann manuell wie auch durch einen Antriebe erfolgen. Die horizontale Verschiebe wird vorzugsweise ebenfalls mittels einer Führung 9 durchgeführt.

### Bezugszeichenliste

- 1: Vorrichtung
- 2: Grundgestell
- 3: Grundplatte
- 4: Führung
- 5: Spannvorrichtung
- 6: Bearbeitungseinheit
- 7: Heizelement
- 8: Öffnung
- 9: Führung

## Patentansprüche

1. Vorrichtung (1) zum stirnseitigen Verschweissen von Kunststoffteilen vorzugsweise Kunststoffrohen und Kunststofffittings beinhaltend ein Grundgestell (2), wobei das Grundgestell eine Grundplatte (3) aufweist, mindestens eine Führung (4), Spannvorrichtungen (5) zur koaxialen Fixierung der zu verschweissenden Kunststoffteile, wobei die Führung (4) zur Führung mindestens einer Spannvorrichtung (5) dient und die Spannvorrichtung (5) und die Führung (4) auf der Grundplatte (3) angeordnet sind, eine Bearbeitungseinheit (6) zum Vorbehandeln der Stirnseiten der zu verschweissenden Kunststoffteile vorzugsweise einen Hobel und ein Heizelement (7) zum Aufheizen der Enden der zu verschweissenden Kunststoffteile, **dadurch gekennzeichnet, dass** die Bearbeitungseinheit (6) und das Heizelement (7) während ihres Nichteinsatzes bzw. in der Ruheposition unterhalb der Grundplatte (3) horizontal verschiebbar angeordnet sind.

2. Vorrichtung (1) nach Anspruch 1, **dadurch gekennzeichnet, dass** die komplette Bearbeitungseinheit (6) und das komplette Heizelement (7) während des Nichteinsatzes bzw. in der Ruheposition unterhalb der Grundplatte angeordnet sind.

3. Vorrichtung (1) nach einem der Ansprüche 1 oder 2, **dadurch gekennzeichnet, dass** die Bearbeitungseinheit (6) und das Heizelement (7) durch Hochfahren aus der Ruheposition während ihres Nichteinsatzes unterhalb der Grundplatte (3) in die Einsatzposition auf Ebene Grundplatte (3) bringbar ist.

4. Vorrichtung (1) nach einem der Ansprüche 1 bis 3, **dadurch gekennzeichnet, dass** die Bearbeitungseinheit (6) und das Heizelement (7) hochfahrbar und absenkbar sind.

5. Vorrichtung (1) nach einem der Ansprüche 1 bis 4, **dadurch gekennzeichnet, dass** das Hochfahren und Absenken der Bearbeitungseinheit (6) und des Heizelements (7) vertikal zur Grundplatte (3) erfolgt.

6. Vorrichtung (1) nach einem der Ansprüche 1 bis 5, **dadurch gekennzeichnet, dass** die Grundplatte (3) eine Öffnung (8) aufweist, wobei die Öffnung (8) zwischen zwei Spannvorrichtung (5) angeordnet ist.

7. Vorrichtung (1) nach einem der Ansprüche 1 bis 6, **dadurch gekennzeichnet, dass** die Bearbeitungseinheit (6) und das Heizelement (7) in der Ruheposition unterhalb der Grundplatte durch eine Führung horizontal verschiebbar (3) angeordnet sind.

## Claims

1. Device (1) for welding plastic parts, preferably plastic pipes and plastic fittings, at the end faces, comprising a base frame (2), wherein the base frame has a base plate (3), at least one guide (4), clamping devices (5) for coaxially fixing the plastic parts to be welded, wherein the guide (4) serves for guiding at least one clamping device (5) and the clamping device (5) and the guide (4) are arranged on the base plate (3), a processing unit (6) for pretreating the end faces of the plastic parts to be welded, preferably a trimmer, and a heating element (7) for heating up the ends of the plastic parts to be welded, **characterized in that**, while they are not in use or are in the rest position, the processing unit (6) and the heating element (7) are arranged horizontally in a displaceable manner underneath the base plate (3).

2. Device (1) according to Claim 1, **characterized in that**, while they are not in use or are in the rest position, the complete processing unit (6) and the complete heating element (7) are arranged underneath the base plate.

3. Device (1) according to either of Claims 1 and 2, **characterized in that** the processing unit (6) and the heating element (7) can be brought into the position for use, level with the base plate (3), by raising them out of the rest position while they are not in use, underneath the base plate (3).

4. Device (1) according to one of Claims 1 to 3, **characterized in that** the processing unit (6) and the heating element (7) are raiseable and lowerable.

5. Device (1) according to one of Claims 1 to 4, **characterized in that** the raising and lowering of the processing unit (6) and the heating element (7) are performed vertically in relation to the base plate (3) .

6. Device (1) according to one of Claims 1 to 5, **characterized in that** the base plate (3) has an opening (8), wherein the opening (8) is arranged between two clamping devices (5).

7. Device (1) according to one of Claims 1 to 6, **characterized in that** the processing unit (6) and the heating element (7) are arranged horizontally in a displaceable manner (3) by a guide in the rest position underneath the base plate.

## Revendications

1. Dispositif (1) de soudage frontal de pièces en matière plastique, de préférence de tubes et raccords en matière plastique, ledit dispositif comprenant un cadre de base (2), le cadre de base comportant une plaque de base (3), au moins un guide (4), des dispositifs de serrage (5) destinés à la fixation coaxiale des pièces en matière plastique à souder, le guide (4) servant à guider au moins un dispositif de serrage (5) et le dispositif de serrage (5) et le guide (4) étant disposés sur la plaque de base (3), une unité de traitement (6) destinée à prétraiter les côtés frontaux des pièces en matière plastique à souder de préférence un rabot et un élément chauffant (7) destiné à chauffer les extrémités des pièces en matière plastique à souder, **caractérisé en ce que** l'unité de traitement (6) et l'élément chauffant (7) sont disposés de manière à pouvoir coulisser horizontalement au-dessous de la plaque de base (3) en position de repos ou lorsqu'ils ne sont pas utilisés.

2. Dispositif (1) selon la revendication 1, **caractérisé en ce que** l'unité de traitement complète (6) et l'élément chauffant complet (7) sont disposés au-dessous de la plaque de base en position de repos ou lorsqu'ils ne sont pas utilisés.

3. Dispositif (1) selon l'une des revendications 1 ou 2, **caractérisé en ce que** l'unité de traitement (6) et l'élément chauffant (7) peuvent être amenés par déplacement vers le haut de la position de repos lorsqu'ils ne sont pas utilisés au-dessous de la plaque de base (3) jusque dans la position d'utilisation au niveau de la plaque de base (3) vers le haut.

4. Dispositif (1) selon l'une des revendications 1 à 3, **caractérisé en ce que** l'unité de traitement (6) et l'élément chauffant (7) peuvent être déplacés vers le haut et vers le bas.

5. Dispositif (1) selon l'une des revendications 1 à 4, **caractérisé en ce que** le déplacement vers le haut et vers le bas de l'unité de traitement (6) et de l'élément chauffant (7) se fait verticalement par rapport à la plaque de base (3).

6. Dispositif (1) selon l'une des revendications 1 à 5, **caractérisé en ce que** la plaque de base (3) comporte une ouverture (8), l'ouverture (8) étant ménagée entre deux dispositifs de serrage (5).

7. Dispositif (1) selon l'une des revendications 1 à 6, **caractérisé en ce que** l'unité de traitement (6) et l'élément chauffant (7) sont disposés de manière à pouvoir coulisser horizontalement dans la position de repos au-dessous de la plaque de base (3) par le biais d'un guide.
